# EUROPEAN PATENT SPECIFICATION

(11) **EP 2 962 893 B1**
(45) Date of publication and mention of the grant of the patent: **10.04.2019**
(21) Application number: 15171734.5
(22) Date of filing: 11.06.2015
(51) Int. Cl.: B60N 2/28, B60N 2/427, B60N 2/42

(54) **A CHILD VEHICLE SEAT**
KINDERFAHRZEUGSITZ
SIÈGE ENFANT DE VÉHICULE

(30) Priority: 24.06.2014 NL 2013054
(43) Date of publication of application: 06.01.2016
(73) Proprietor: Maxi Miliaan B.V., 5704 RD Helmond (NL)
(72) Inventor: Toonders, Sander Gerardus, 5554 ET Valkenswaard (NL); Garnier, Nicolas, 49230 Saint Germain sur Moine (FR); van Bruul, Christel Maria, 5672 SL Nuenen (NL)
(74) Representative: Veldman-Dijkers, Cornelia G. C.

(56) References cited:
- EP-A2- 1 985 491
- DE-A1-102011 003 650
- US-A1- 2009 179 470
- US-A1- 2010 026 059
- US-A1- 2010 078 976

## Description

### FIELD OF THE INVENTION

The invention relates to a child vehicle seat comprising a seat bottom and a seat back, head support portions located on each lateral side of the seat back as well as shoulder support portions located on each lateral side of the seat back between the head support portions and the seat bottom, wherein each head support portion is provided with a first energy dissipation element, whilst each shoulder support portion is provided with a second energy dissipation element.

### BACKGROUND OF THE INVENTION

Such a child vehicle seat, which is known from US2010026059A1, comprises an energy dissipation system comprising a first multi-pad unit and a second multi-pad unit located on opposite sides of the child vehicle seat. Each multi-pad unit comprises a first ride-down pad and a second ride-down pad. The first ride-down pad is positioned high on the seat back to lie in close proximity to the head of a child seated in the juvenile seat. The second ride-down pad is positioned relatively lower on the seat back to lie in close proximity to the shoulder of a child seated in the juvenile seat during application of an external impact force to a side-wing panel of the seat back. Due to the first and second ride-down pads, the head and shoulders of the child positioned in the child vehicle seat are cushioned.

During external side impact forces, for example in a car crash, the shoulders and head of the child will collide against the head support portion and the shoulder support portion, respectively, whereby the forces on the child need to be minimized to prevent injury of the child.

At the known child vehicle seat the first ride-down pad comprises two force dissipaters whilst the second ride-down pad comprises only one force dissipater. Due to the two force dissipaters the first ride-down pad is relatively thick and the distance between the two first ride-down pads is much smaller than the distance between the two second ride-down pads. Due to the smaller distance, there is a risk that in case of a side-impact collision the head, which is much more vulnerable than the shoulders, will be the first part of the child hitting the side of the child vehicle seat. Furthermore there is little space to move the head resulting in lack of comfort and getting warm. The above mentioned US 2010/026059 discloses a child vehicle seat comprising a seat bottom and a seat back, head support portions and located on each lateral side of the seat back as well as shoulder support portions located on each lateral side of the seat back between the head support portions and the seat bottom, wherein each head support portion is provided with a first energy dissipation element, whilst each shoulder support portion is provided with a second energy dissipation element.

### SUMMARY OF THE INVENTION

The object of the invention is to provide a child vehicle seat wherein a better protection against side-impact collision is obtained.

This object is accomplished with the child vehicle seat according to the invention in that the first energy dissipation element has a compressive strength less than 50 kPa, the second energy dissipation element has a compressive strength between 50 and 500 kPa, measured at a deformation range of 10% - 40%, wherein the difference between the compressive strength of the first energy dissipation element and the second energy dissipation element is at least 20 kPa.

When the head of the child collides with the first energy dissipation element, the first energy dissipation element will easily be deformed and relatively low forces are applied on the head of the child by the first energy dissipation element.

When the shoulder of the child collides with the second energy dissipation element, the second energy dissipation element having a higher compressive strength will not that easily be deformed as the first energy dissipation element and a large amount of the forces applied on the child will be absorbed by the second energy dissipation element. The difference between the compressive strength of the first energy dissipation element and the second energy dissipation element results in that the forces on the head are absorbed at a larger deformation of the energy dissipation element than the forces on the shoulder.

As is well known the compressive strength at a deformation range of 10 - 40% is the necessary compression stress needed to obtain such a compression strain. For a skilled person it is directly and unambiguously clear that to determine the test method to determine the compressive strength at a given deformation range, he will use the International Organization for Standardization to find the required test method.

ISO 3386-1 covers the determination of stress-strain characteristics of materials with a density up to 250 kg/m3 like cellular flexible polymeric materials such as soft foams to be used as first energy dissipation element at the head support portion. The compression stress/strain characteristic is a measure of the load-bearing properties of the material. The compression stress is the stress, expressed in kilopascals, required to produce a compression, at a constant rate of deformation during the fourth loading cycle of the test specified in ISO 3386-1, expressed as a function of the compression.

This ISO-norm also defines a compression stress value (CV40) being the compression stress/strain characteristic for a compression of 40 %.

ISO 3386-2 refers to high density flexible cellular polymeric materials.

ISO 844:2014 covers the determination of compression properties of rigid cellular like expanded foams such as EPS, EPP to be used as second energy dissipation element at the shoulder support portion. The compressive strength is the maximum compressive force divided by the initial cross-sectional area of the test specimen when the relative deformation is 10 %.

Preferably, in case of a collision, the child will first collide with his shoulders on the second energy dissipation element and after the first moment of impact on the second energy dissipation element, the child will collide with his head on the first energy dissipation element.

Preferably, the distance between the two opposite second energy dissipation elements is slightly larger than the distance between the two shoulders of the child so that the child is almost locked with his shoulders between the second energy dissipation elements. The distances depend on the age and size of the child.

An embodiment of the child vehicle seat according to the invention is characterized in that the compressive strength of the first energy dissipation element is less than 10 kPa, preferably less than 5 kPa.

With such a low compressive strength, the first energy dissipation element will apply relatively low forces on the head.

Another embodiment of the child vehicle seat according to the invention is characterized in that the compressive strength of the second energy dissipation element is in a range between 200 - 500 kPa, preferably between 200 - 300 kPa.

With such a compressive strength, the second energy dissipation element will apply forces on the shoulder being large enough to take care of the impact during collision and being low enough to prevent injury of the child.

Another embodiment of the child vehicle seat according to the invention is characterized in that the energy dissipation element has a thickness of at least 15 millimetre, preferably 20 at least millimetre and more preferably at least 25 millimetre.

With such a thickness, the energy dissipation element is able to be deformed sufficiently during impact of the head or shoulder on the energy dissipation element to be able to absorb the forces on the head and shoulder.

Another embodiment of the child vehicle seat according to the invention is characterized in that the first energy dissipation element is made from a foam such as polyurethane (PU) foam, a gel, a plastic provided with air chambers, a rubber, an airbag or a combination thereof.

Such materials are easily available at relatively low costs have low weight, provide comfort and are suitable in child car seats.

Another embodiment of the child vehicle seat according to the invention is characterized in that the second energy dissipation element is made from expanded polystyrene (EPS), Expanded Polypropylene (EPP), Extruded Polystyrene (XPS), Ethylene Vinyl Acetate (EVA), a foam, a plastic, a rubber or a combination thereof.

Such materials are easily available at relatively low costs have low weight, provide comfort and are suitable in child car seats.

Another embodiment of the child vehicle seat according to the invention is characterized in that the child vehicle seat comprises a detachably cushioned insert being provided with third energy dissipation elements, which third energy dissipation elements are located against the second energy dissipation elements of the shoulder support portions.

Such a detachably cushioned insert is suitable for relatively small children or premature to reduce the distance between the shoulder support portions so that, preferably, the distance between the two opposite third energy dissipation elements is slightly larger than the distance between the two shoulders of the child so that the child is almost locked with his shoulders between the third energy dissipation elements.

Another embodiment of the child vehicle seat according to the invention is characterized in that the third energy dissipation elements have a similar compressive strength as the second energy dissipation elements.

In this way the forces on the shoulder of the child are being absorbed in the same manner with or without the cushioned insert.

Another embodiment of the child vehicle seat according to the invention is characterized in that the third energy dissipation element is made from expanded polystyrene (EPS), Expanded Polypropylene (EPP), Extruded Polystyrene (XPS), Ethylene Vinyl Acetate (EVA), a foam, a plastic, a rubber or a combination thereof.

Such materials are easily available at relatively low costs have low weight, provide comfort and are suitable in child car seats.

Another embodiment of the child vehicle seat according to the invention is characterized in that at least one of the energy dissipation elements is covered with a skin made of textile, leather, plastic, nylon, a web and/or a wadding.

Such a skin provides the energy dissipation elements with a desired appearance, touch and comfort and good positioning of the energy dissipation elements.

Another embodiment of the child vehicle seat according to the invention is characterized in that at least the head support portions and the shoulder support portions are at least partly mounted in a plastic seat-shaped shell.

The plastic seat-shaped shell can be relatively rigid and provides support for the head support portions and the shoulder support portions.

### BRIEF DESCRIPTION OF THE DRAWINGS

The child vehicle seat according to the invention will further be explained with reference to the drawings, wherein,
figure 1 shows a perspective view of a child vehicle seat according to the invention, wherein a child is located,
figure 2 shows the child vehicle seat as shown in figure 1 without a child,
figure 3 shows the child vehicle seat as shown in figure 2 with a detached insert and pivoted handle,
figure 4 shows a detail of the inside of the child vehicle seat as shown in figures 1-3,
figure 5 shows a further detail of the child vehicle seat as shown in figure 4,
figure 6A-6B show a perspective view and a front view of the insert of the child vehicle seat as shown in the figures 1-3,
figure 7 shows a perspective view of a detail of a first embodiment of the inside of the insert as shown in figures 6A-6B,
figure 8 shows a front view of a detail of the inside of a second embodiment of the insert as shown in figures 6A-6B,
figure 9 shows a detail of the inside of the child vehicle seat provided with the insert as shown in figures 1-3,
figure 10 shows a further detail of the child vehicle seat as shown in figure 8.

In the drawings, like reference numerals refer to like elements.

### DESCRIPTION OF THE FIGURES

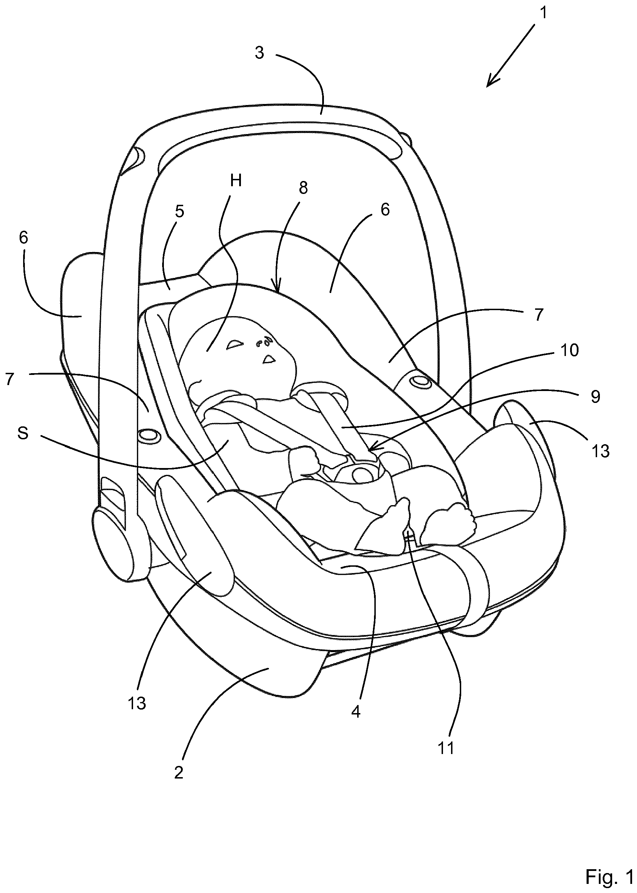

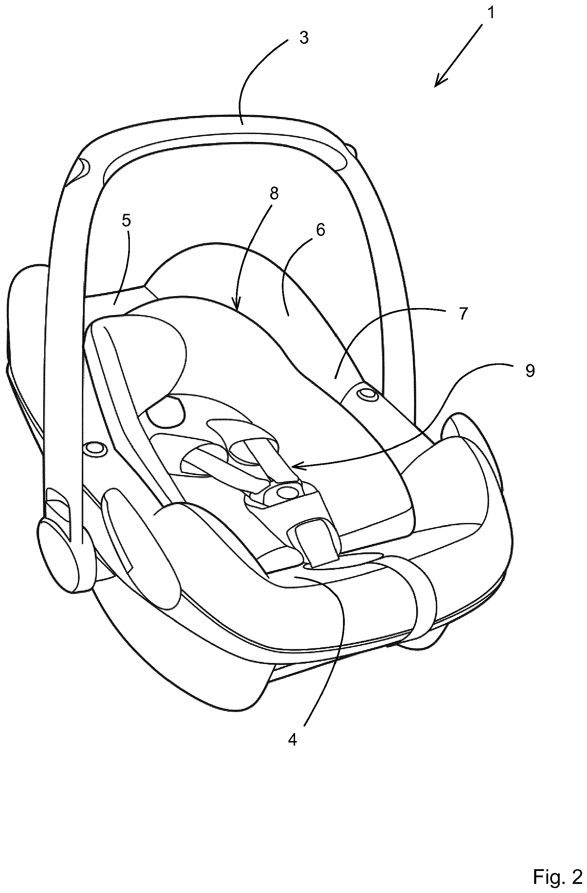

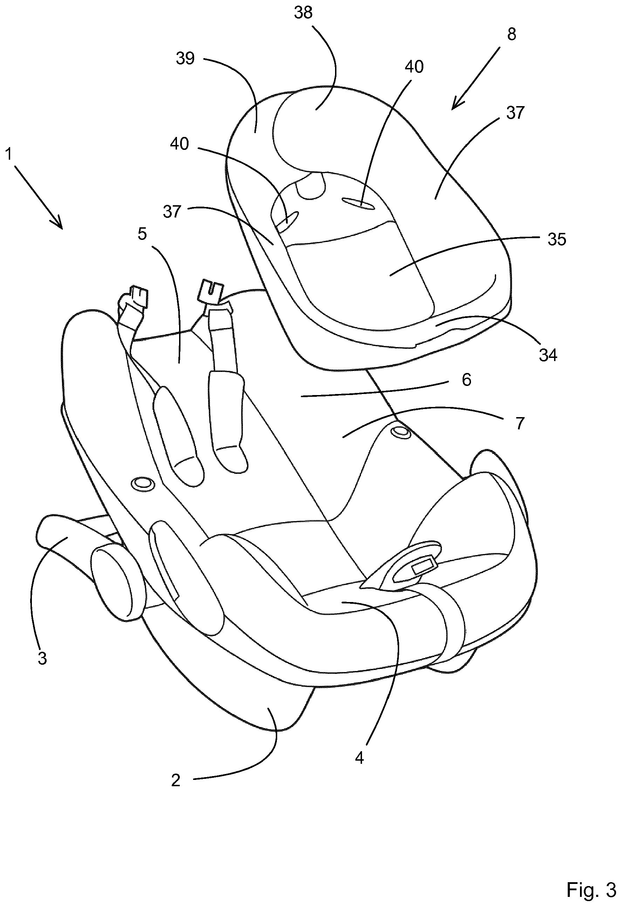

Figures 1-3 show different views of a child vehicle seat 1 according to the invention. The child vehicle seat 1 comprises a plastic seat shaped shell 2 provided with a handle 3 which is pivotable with respect to the plastic seat shaped shell 2 between a first position, as shown in figure 1 wherein the handle 3 can be used to carry the child vehicle seat to a second position, as shown in figure 3 to support the plastic seat shaped shell 2. Such a handle 3 is well known in the art and will not further be explained.

The child vehicle seat 1 further comprises a seat bottom 4 and a seat back 5. On both lateral sides of the seat back 5 head support portions 6 are located. Between each head support portion 6 and the seat bottom 4 a shoulder support portion 7 is located. The child vehicle seat 1 is provided with a detachable cushioned insert 8 which will further be explained with reference to the drawings 6A-9.

As is well known in the art, the child vehicle seat 1 is provided with a belt system 9 comprises two shoulder belts 10 and a crotch portion 11 which are detachably connected to each other (figure 1-2) to hold the child in the child vehicle seat 1.

The head support portions 6, the shoulder support portion 7, the seat bottom 4 and the seat back 5 are covered with a skin, for example made of textile, leather, plastic or another kind of web and wadding. The skin can be 5-20 millimetre thick but is for comfort only and provides nearly no energy dissipation. Such skin provides the child vehicle seat 1 with a desired appearance and comfort. Such a skin will hardly have any influence on the absorption of the forces during a side-impact collision.

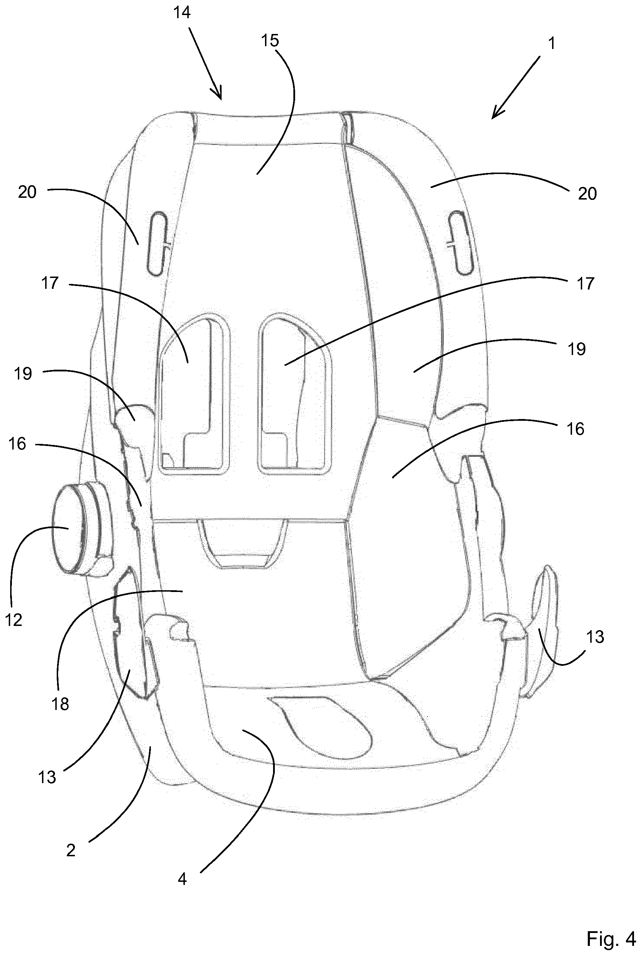

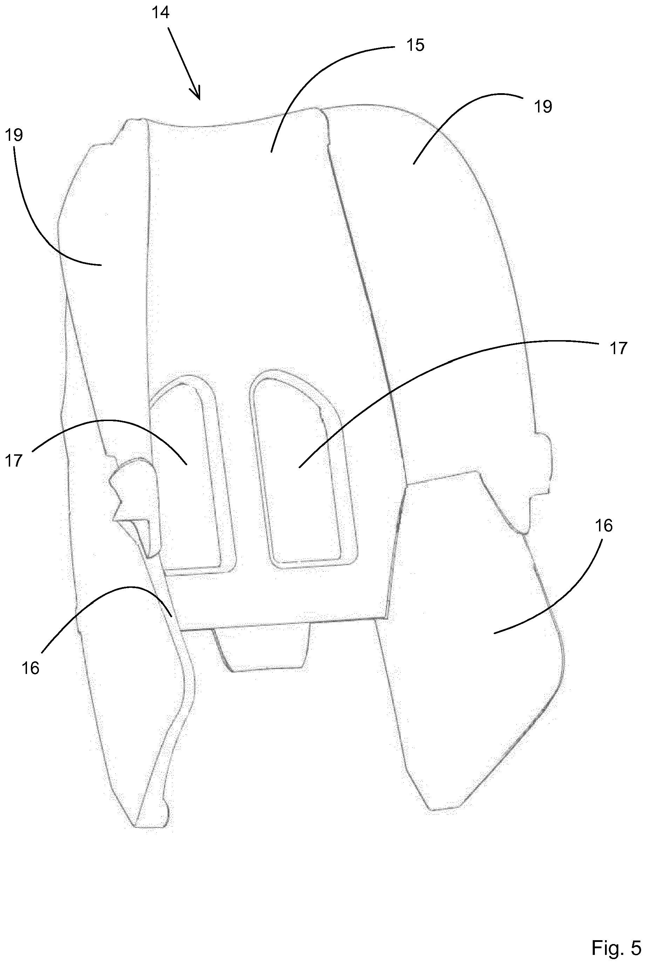

The figures 4 and 5 show perspective views of the inside of the child vehicle seat 1 after the skin and the handle 3 have been removed.

In figure 4 the shell 2 is visible comprising the seat bottom 4, pivot portions 12 for connecting to the handle 3 and guide elements 13 for guiding a belt system of a vehicle. The plastic seat shaped shell 2 is made from a rigid plastic like polypropylene (PP) with a compressive strength of more than 500 kPa.

Inside the seat shaped shell 4 an element 14 is located comprising a seat back portion 15 and two shoulder support portions 16. The seat back portion 15 is provided with two openings 17 for guiding the shoulder belts 10 from the backside of the child vehicle seat 1 to the front side thereof.

The seat back portion 15 and the two shoulder support portions 16 are made of expanded polystyrene (EPS) having a compressive strength between 50 and 500 kPa measured at a deformation range of 10%-40%, preferably in a range between 200-500 kPa more preferably between 200-300 kPa. In a tested model of the child vehicle seat, the compressive strength was 250 kPa and the thickness was 25 millimetre. The thickness can be between 15 and 40 millimetre. As can be seen in figure 4 the shoulder support portions 16 extend from the seat back portion 15 towards to the seat bottom 4. Between the shoulder support portions 16 an intermediate portion 18 of the seat shaped shell 2 is visible which provide a smooth transition from the seat bottom 4 to the seat back portion 15. On both sides of the seat back portion 15, above the shoulder support portions 16 head support portions 19 are located being made of polyurethane foam. The head support portions 19 have a compressive strength less than 50 kPa, preferably less than 10 kPa, more preferably less than 5 kPa. In a tested model of the child vehicle seat, the compressive strength was 3 kPa and the thickness was 20 millimetre. The thickness can be between 15 and 40 millimetre.

On a front side remote of the seat back portion 15, each head support portion 19 is provided with a plastic rim 20 made of polypropylene (PP) or thermoplastic vulcanized (TPV) - material. The rim 20 prevents the relatively soft head support portion 19 to be deformed if an adult pushes thereon from the outside of the child vehicle seat 1. However, the rim 20 is not located in the area where the head H of the child rests against the head support portion 19.

In figure 5 only the element 14 comprising the seat back portion 15 and the two shoulder support portions 16 as well as the two head support portions 19 are shown. The head support portions 19 forms first dissipation elements whilst the shoulder support portions 16 forms second energy dissipation elements.

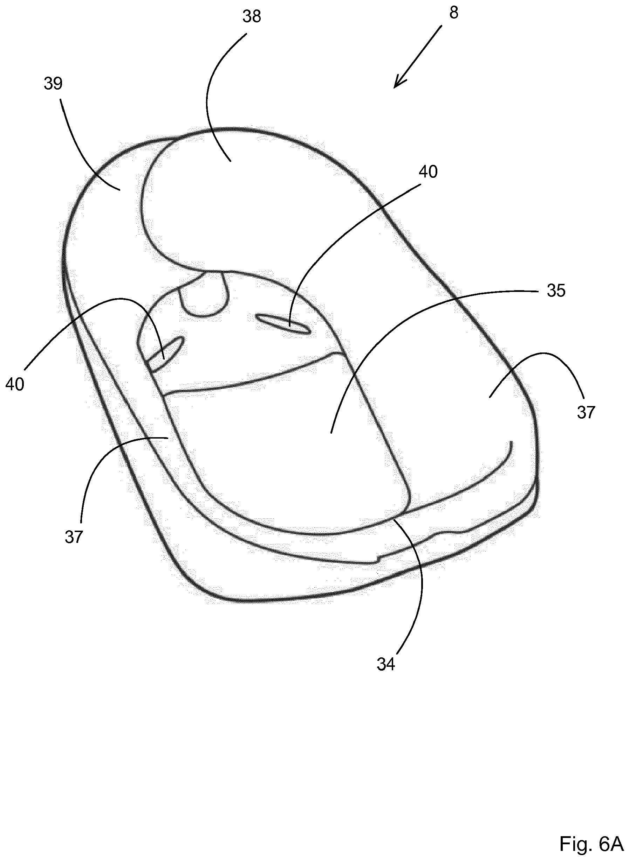

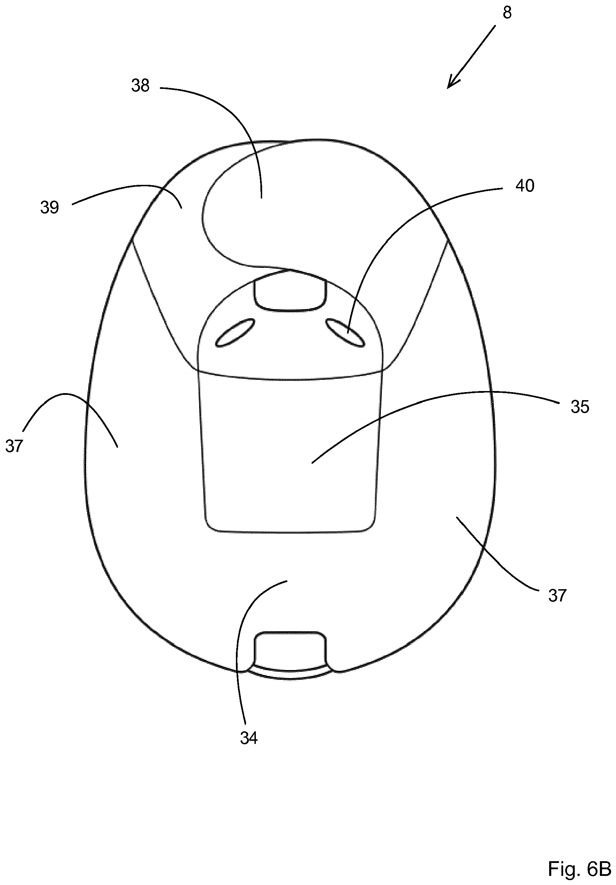

Figures 6A and 6B show the insert 8 made of a soft material like textile, leather or other kind of web. The insert 8 comprises an insert seat bottom 34 and an insert seat back 35. On the lateral sides of the insert seat back 35 side support portions 37 are located, which extend from the insert seat bottom 34 to an end 38, 39 extending beyond the insert seat back 35. The insert seat back 35 is provided with openings 40 for guiding the shoulder belts 10 from the back side of the insert 8 to the front side thereof. The insert seat bottom 34 as well as the side support portions 37 are movable with respect to the insert seat back 35 between a first position as shown as in figure 6A whereby a first side of the insert seat back 35 is visible to a second position wherein the now visible side of the insert seat back 35 forms the rear side of the insert 8 whilst the in figure 6A not visible rear side of the insert seat back 35 will then be used as the side against which the child will rest. In this manner the insert 8 can be used in two different positions, for example two different designs on each side of the insert 8 can be used, or the other side of the insert 8 can be used in case that one side has become dirty.

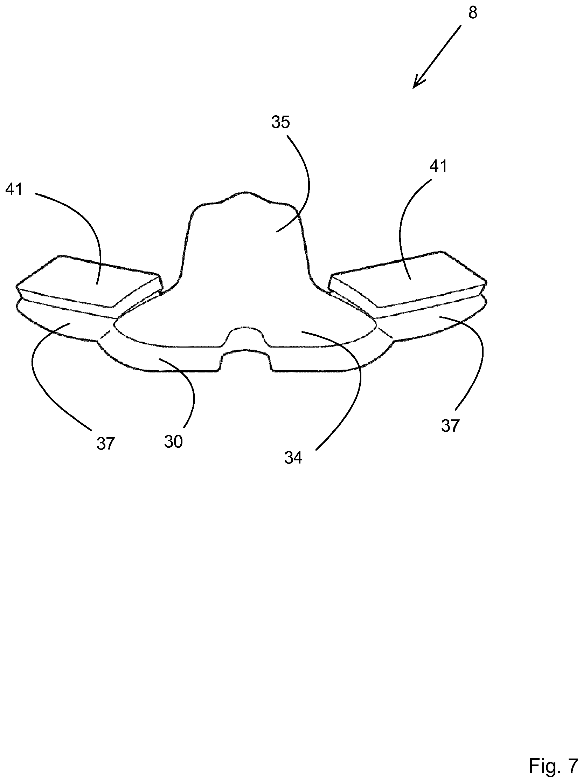

Figure 7 shows a perspective view of a detail of a first embodiment of the inside of the insert as shown in figures 6A-6B. The insert 8 comprises a back plate 30 on which soft parts made of foam or a wadding are mounted to form the insert seat bottom seat 34 and parts of the insert seat back 35. On parts of the back plate 30 forming parts of the side support portions 37 third energy dissipation element 41 are mounted.

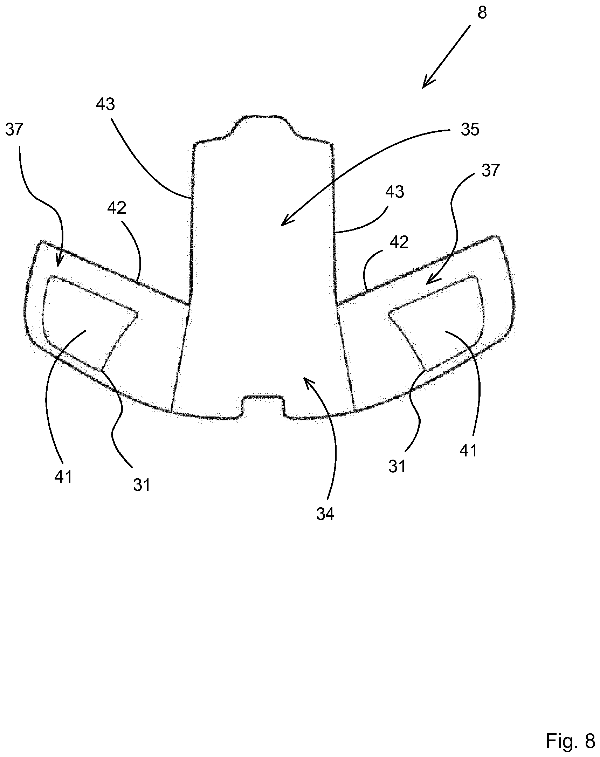

Figure 8 shows a front view of a detail of a second embodiment of the inside of the insert as shown in figures 6A-6B. The insert 8 comprises the insert seat bottom seat 34, parts of the insert seat back 35 as well as parts of the side support portions 37, which side support portions 37 are provided with passages 31 in which third energy dissipation element 41 are located. The insert seat bottom seat 34, parts of the insert seat back 35 as well as parts of the side support portions 37 are made of a foam.

In the insert 8 as shown in figures 7 and 8 the edge 42 of the side support portions 37 are connected to edge 43 of the insert seat back 35.

The third energy dissipation elements 41 have a compressive strength between 50 and 500 kPa measured at a deformation range of 10%-40%, preferably in a range between 200- 500 kPa, more preferably between 200-300 kPa. In a test model of the child vehicle seat the compressive strength parts 250 kPa. The thickness of the third energy dissipation elements 34 is 15-25 millimetre, for example 20 millimetre.

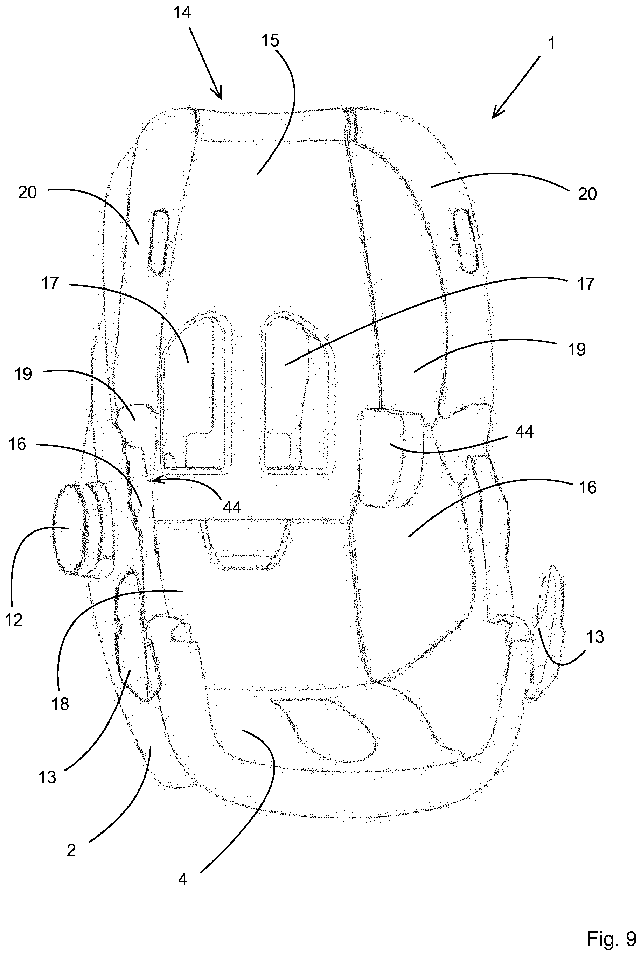

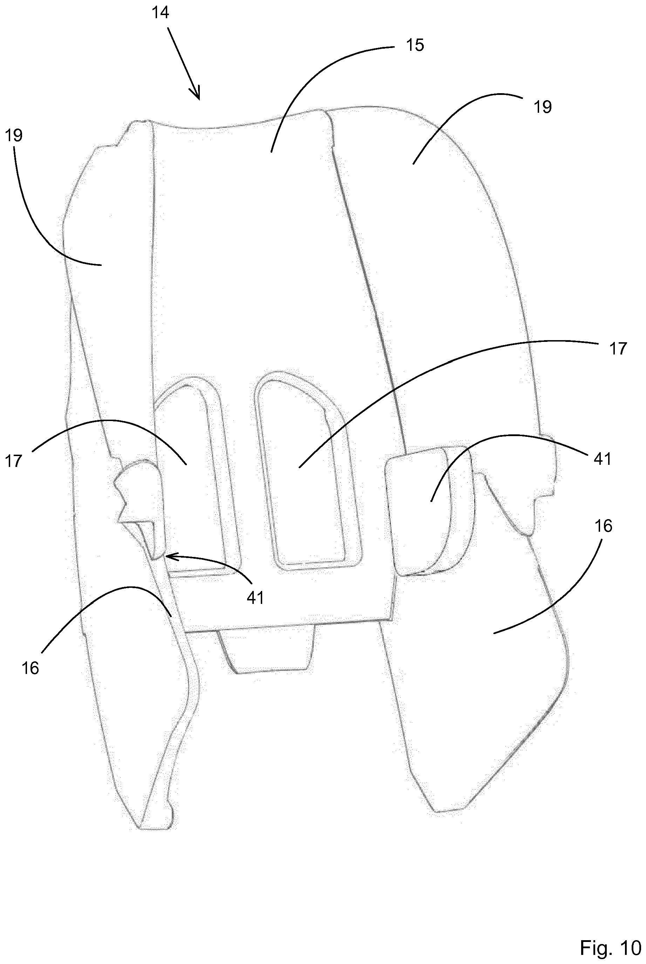

The figures 9 and 10 are similar to the figures 4 and 5 except that in the figures 9 and 10 also the third energy dissipation elements 41 are shown which, when the insert 8 is located on the seat bottom 4 and the seat back 5, are located against the shoulder support portions 16 forming the second energy dissipation elements with the skins of the child vehicle seat 1 and the insert 8 located there between. The third energy dissipation elements 41 are located close to the shoulder support portions 16 and close to or at the border 44 between the head support portion 19 forming the first energy dissipation element and the shoulder support portion 16 forming the second energy dissipation element to be located close to the shoulders of the child.

In use, the child is located in the child vehicle seat 1 and maintained therein by means of the belt system 9. If no insert 8 is present in the child vehicle seat 1, the shoulders S of the child are located between the shoulder support portions 7 provided with the second energy dissipation elements and the head H of the child is located between the head support portions 6 provided with the first energy dissipation elements. With the insert 8 in the child vehicle seat 1, the shoulders S of the child are located between the third energy dissipation elements 41 resting against the shoulder support portions 7 provided with the second energy dissipation elements and the head H of the child is located between the head support portions 6 provided with the first energy dissipation elements. In case of a collision with side impact forces on the child vehicle seat 1, the shoulders S of the child will hit the second or third energy dissipation element, whilst the head H will collide with the first energy dissipation element, whereby due to the different compressive strength of the energy dissipation elements most of the impact forces will be taken care of by the shoulders S.

It is also possible to make the energy dissipation elements from other materials.

It is also possible to provide the child vehicle seat 1 with a 5 points harness system.

The person skilled in the art will realize that the present invention is by no means limited to the preferred embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the scope should not be construed as limiting the scope of the claims.

### LIST OF REFERENCE SIGNS

- 1: child vehicle seat
- 2: shell
- 3: handle
- 4: seat bottom
- 5: seat back
- 6: head support portion
- 7: shoulder support portion
- 8: insert
- 9: belt system
- 10: shoulder belt
- 11: crotch portion
- 12: pivot portion
- 13: guide element
- 14: element
- 15: seat back portion
- 16: shoulder support portion / second energy dissipation element
- 17: opening
- 18: intermediate portion / first energy dissipation element
- 19: head support portion
- 20: rim
- 30: back plate
- 31: passage
- 34: insert seat bottom
- 35: insert seat back
- 37: side support
- 38: end
- 39: end
- 40: opening
- 41: third energy dissipation element
- 42: edge
- 43: edge
- 44: border

## Claims

1. A child vehicle seat (1) comprising a seat bottom (4) and a seat back (5), head support portions (6) located on each lateral side of the seat back (5) as well as shoulder support portions (7) located on each lateral side of the seat back (5) between the head support portions (6) and the seat bottom (4), wherein each head support portion (6) is provided with a first energy dissipation element (19), whilst each shoulder support portion (7) is provided with a second energy dissipation element (16), **characterized in that** the first energy dissipation element (19) has a compressive strength less than 50 kPa, the second energy dissipation element (16) has a compressive strength between 50 and 500 kPa, measured at a deformation range of 10% - 40%, wherein the difference between the compressive strength of the first energy dissipation element (19) and the second energy dissipation element (16) is at least 20 kPa.

2. A child vehicle seat (1) according to claim 1, **characterized in that** the compressive strength of the first energy dissipation element (19) is less than 10 kPa, preferably less than 5 kPa.

3. A child vehicle seat (1) according to claim 1 or 2, **characterized in that** the compressive strength of the second energy dissipation element (16) is in a range between 200 - 500 kPa, preferably between 200 - 300 kPa.

4. A child vehicle seat (1) according to claim 1, 2 or 3, **characterized in that** the energy dissipation element (16, 19) has a thickness of at least 15 millimetre, preferably at least 20 millimetre and more preferably at least 25 millimetre.

5. A child vehicle seat (1) according to any one of the preceding claims, **characterized in that** the first energy dissipation element (19) is made from a foam such as polyurethane (PU) foam, a gel, a plastic provided with air chambers, a rubber, an airbag or a combination thereof.

6. A child vehicle seat (1) according to any one of the preceding claims, **characterized in that** the second energy dissipation element is made from expanded polystyrene (EPS), Expanded Polypropylene (EPP), Extruded Polystyrene (XPS), Ethylene Vinyl Acetate (EVA), a foam, a plastic, a rubber or a combination thereof.

7. A child vehicle seat (1) according to any one of the preceding claims, **characterized in that** the child vehicle seat (1) comprises a detachably cushioned insert (8) being provided with third energy dissipation elements (41), which third energy dissipation elements (41) are located against the second energy dissipation elements (16) of the shoulder support portions (7).

8. A child vehicle seat (1) according to claim 7, **characterized in that** the third energy dissipation elements (41) have a similar compressive strength as the second energy dissipation elements (16).

9. A child vehicle seat (1) according to claim 7 or 8, **characterized in that** the third energy dissipation element (41) is made from expanded polystyrene (EPS), Expanded Polypropylene (EPP), Extruded Polystyrene (XPS), Ethylene Vinyl Acetate (EVA), a foam, a plastic, a rubber or a combination thereof.

10. A child vehicle seat (1) according to any one of the preceding claims, **characterized in that** at least one of the energy dissipation elements (16, 19, 41) is covered with a skin made of textile, leather, plastic, nylon, a web, and/or a wadding.

11. A child vehicle seat (1) according to any one of the preceding claims, **characterized in that** at least the head support portions (6) and the shoulder support portions (7) are at least partly mounted in a plastic seat-shaped shell (2).

## Patentansprüche

1. Kinder-Fahrzeugsitz (1), der einen Sitzboden (4) und einen Sitzrücken (5), Kopfstützabschnitte (6), die auf jeder lateralen Seite des Sitzrückens (5) angeordnet sind, sowie Schulterstützabschnitte (7), die auf jeder lateralen Seite des Sitzrückens (5) zwischen den Kopfstützabschnitten (6) und dem Sitzboden (4) angeordnet sind, aufweist, wobei jeder Kopfstützabschnitt (6) mit einem ersten Energieableitungselement (19) versehen ist, während jeder Schulterstützabschnitt (7) mit einem zweiten Energieableitungselement (16) versehen ist, **dadurch gekennzeichnet, dass** das erste Energieableitungselement (19) eine Druckfestigkeit von weniger als 50 kPa hat, das zweite Energieableitungselement (16) eine Druckfestigkeit zwischen 50 und 500 kPa hat, gemessen bei einem Verformungsbereich von 10% - 40%, wobei die Differenz zwischen der Druckfestigkeit des ersten Energieableitungselements (19) und des zweiten Energieableitungselements (16) mindestens 20 kPa beträgt.

2. Kinder-Fahrzeugsitz (1) gemäß Anspruch 1, **dadurch gekennzeichnet, dass** die Druckfestigkeit des ersten Energieableitungselements (19) weniger als 10 kPa, bevorzugt weniger als 5 kPa beträgt.

3. Kinder-Fahrzeugsitz (1) gemäß Anspruch 1 oder 2, **dadurch gekennzeichnet, dass** die Druckfestigkeit des zweiten Energieableitungselements (16) in einem Bereich zwischen 200 - 500 kPa, bevorzugt zwischen 200 - 300 kPa liegt.

4. Kinder-Fahrzeugsitz (1) gemäß Anspruch 1, 2 oder 3, **dadurch gekennzeichnet, dass** das Energieableitungselement (16, 19) eine Dicke von mindestens 15 Millimetern, bevorzugt mindestens 20 Millimetern und besonders bevorzugt mindestens 25 Millimetern hat.

5. Kinder-Fahrzeugsitz (1) gemäß einem der vorstehenden Ansprüche, **dadurch gekennzeichnet, dass** das erste Energieableitungselement (19) aus einem Schaumstoff wie etwa Polyurethan- (PU-) Schaumstoff, einem Gel, einem mit Luftkammern versehenen Kunststoff, einem Kautschuk, einem Luftsack oder einer Kombination daraus hergestellt ist.

6. Kinder-Fahrzeugsitz (1) gemäß einem der vorstehenden Ansprüche, **dadurch gekennzeichnet, dass** das zweite Energieableitungselement aus expandiertem Polystyrol (EPS), expandiertem Polypropylen (EPP), extrudiertem Polystyrol (XPS), Ethylenvinylacetat (EVA), einem Schaumstoff, einem Kunststoff, einem Kautschuk oder einer Kombination daraus hergestellt ist.

7. Kinder-Fahrzeugsitz (1) gemäß einem der vorstehenden Ansprüche, **dadurch gekennzeichnet, dass** der Kinder-Fahrzeugsitz (1) einen abnehmbar gepolsterten Einsatz (8) aufweist, der mit dritten Energieableitungselementen (41) versehen ist, wobei die dritten Energieableitungselemente (41) gegen das zweite Energieableitungselements (16) der Schulterstützabschnitte (7) angeordnet sind.

8. Kinder-Fahrzeugsitz (1) gemäß Anspruch 7, **dadurch gekennzeichnet, dass** die dritten Energieableitungselemente (41) eine ähnliche Druckfestigkeit wie die zweiten Energieableitungselemente (16) haben.

9. Kinder-Fahrzeugsitz (1) gemäß Anspruch 7 oder 8, **dadurch gekennzeichnet, dass** das dritte Energieableitungselement (41) aus expandiertem Polystyrol (EPS), expandiertem Polypropylen (EPP), extrudiertem Polystyrol (XPS), Ethylenvinylacetat (EVA), einem Schaumstoff, einem Kunststoff, einem Kautschuk oder einer Kombination daraus hergestellt ist.

10. Kinder-Fahrzeugsitz (1) gemäß einem der vorstehenden Ansprüche, **dadurch gekennzeichnet, dass** mindestens eines der Energieableitungselemente (16, 19, 41) mit einer Haut bedeckt ist, die aus Textil, Leder, Kunststoff, Nylon, einem Netz und/oder einer Wattierung hergestellt ist.

11. Kinder-Fahrzeugsitz (1) gemäß einem der vorstehenden Ansprüche, **dadurch gekennzeichnet, dass** mindestens die Kopfstützabschnitte (6) und die Schulterstützabschnitte (7) mindestens teilweise in einer sitzförmigen Kunststoffschale (2) angebracht sind.

## Revendications

1. Siège enfant pour véhicule (1), comprenant une assise de siège (4) et un dossier de siège (5), des portions de support de tête (6) situées sur chaque côté latéral du dossier de siège (5) ainsi que des portions de support d'épaule (7) situées sur chaque côté latéral du dossier de siège (5) entre les portions de support de tête (6) et l'assise de siège (4), dans lequel chaque portion de support de tête (6) est pourvue d'un premier élément de dissipation d'énergie (19), alors que chaque portion de support d'épaule (7) est pourvue d'un deuxième élément de dissipation d'énergie (16), **caractérisé en ce que** le premier élément de dissipation d'énergie (19) a une résistance à la compression inférieure à 50 kPa, le deuxième élément de dissipation d'énergie (16) a une résistance à la compression entre 50 et 500 kPa, mesurée à une plage de déformation de 10 % à 40 %, dans lequel la différence entre la résistance à la compression du premier élément de dissipation d'énergie (19) et du deuxième élément de dissipation d'énergie (16) est au moins 20 kPa.

2. Siège enfant pour véhicule (1) selon la revendication 1, **caractérisé en ce que** la résistance à la compression du premier élément de dissipation d'énergie (19) est inférieure à 10 kPa, de préférence inférieure à 5 kPa.

3. Siège enfant pour véhicule (1) selon la revendication 1 ou 2, **caractérisé en ce que** la résistance à la compression du deuxième élément de dissipation d'énergie (16) est dans une plage entre 200 et 500 kPa, de préférence entre 200 et 300 kPa.

4. Siège enfant pour véhicule (1) selon la revendication 1, 2 ou 3, **caractérisé en ce que** l'élément de dissipation d'énergie (16, 19) a une épaisseur d'au moins 15 millimètres, de préférence d'au moins 20 millimètres et de préférence encore d'au moins 25 millimètres.

5. Siège enfant pour véhicule (1) selon l'une quelconque des revendications précédentes, **caractérisé en ce que** le premier élément de dissipation d'énergie (19) est fait d'une mousse telle qu'une mousse de polyuréthanne (PU), d'un gel, d'un plastique pourvu de chambres d'air, d'un caoutchouc, d'un coussin de sécurité gonflable ou d'une association de ceux-ci.

6. Siège enfant pour véhicule (1) selon l'une quelconque des revendications précédentes, **caractérisé en ce que** le deuxième élément de dissipation d'énergie est fait de polystyrène expansé (EPS), de polypropylène expansé (EPP), de polystyrène extrudé (XPS), d'acétate de vinyle d'éthylène (EVA), d'une mousse, d'un plastique, d'un caoutchouc ou d'une association de ceux-ci.

7. Siège enfant pour véhicule (1) selon l'une quelconque des revendications précédentes, **caractérisé en ce que** le siège enfant de véhicule (1) comprend un insert rembourré détachable (8) pourvu de troisièmes éléments de dissipation d'énergie (41), lesquels troisièmes éléments de dissipation d'énergie (41) sont situés contre les deuxièmes éléments de dissipation d'énergie (16) des portions de support d'épaule (7).

8. Siège enfant pour véhicule (1) selon la revendication 7, **caractérisé en ce que** les troisièmes éléments de dissipation d'énergie (41) ont une résistance à la compression similaire à celle des deuxièmes éléments de dissipation d'énergie (16).

9. Siège enfant pour véhicule (1) selon la revendication 7 ou 8, **caractérisé en ce que** le troisième élément de dissipation d'énergie (41) est fait de polystyrène expansé (EPS), de polypropylène expansé (EPP), de polystyrène extrudé (XPS), d'acétate de vinyle d'éthylène (EVA), d'une mousse, d'un plastique, d'un caoutchouc ou d'une association de ceux-ci.

10. Siège enfant pour véhicule (1) selon l'une quelconque des revendications précédentes, **caractérisé en ce qu'**au moins un des éléments de dissipation d'énergie (16, 19, 41) est couvert avec un revêtement fait de textile, de cuir, de plastique, de nylon, d'une toile, et/ou d'une ouate.

11. Siège enfant pour véhicule (1) selon l'une quelconque des revendications précédentes, **caractérisé en ce qu'**au moins les portions de support de tête (6) et les portions de support d'épaule (7) sont au moins partiellement montées dans une coque en plastique en forme de siège (2).
